# EUROPEAN PATENT APPLICATION

(11) **EP 4 645 531 A1**
(43) Date of publication of application: **05.11.2025**
(21) Application number: 24823553.3
(22) Date of filing: 18.04.2024
(51) Int. Cl.: H01M 10/658, H01M 10/613, H01M 10/6557, H01M 50/502, H01M 50/211

(54) **BATTERY MODULE AND BATTERY PACK INCLUDING SAME**

(30) Priority: 15.06.2023 KR 20230076755
(71) Applicant: LG Energy Solution, Ltd., Seoul 07335 (KR)
(72) Inventor: LEE, Jung Hoon, Daejeon 34122 (KR); YUN, Hyeonki, Daejeon 34122 (KR); KIM, Hyun Jung, Daejeon 34122 (KR); UM, Taeki, Daejeon 34122 (KR)
(74) Representative: Plasseraud IP
(86) International application number: PCT/KR2024/005255
(87) International publication number: WO 2024/258032

(57) **Abstract**

The present disclosure includes a battery module and a battery pack including the same. A battery module according to an embodiment of the present disclosure includes: a first sub-module and a second sub-module each including a battery cell stack in which a plurality of battery cells are stacked, and a busbar assembly including a busbar electrically connected to the battery cell stack and a busbar frame covering the battery cell stack on at least one side; a module frame in which the first sub-module and the second sub-module are housed; and a flame preventing member located between the first sub-module and the second sub-module, wherein one end of the first sub-module and the other end of the second sub-module are electrically connected to each other.

## Description

### [TECHNICAL FIELD]

### Cross Citation with Related Application(s)

This application claims the benefit of Korean Patent Application No. 10-2023-0076755 filed on June 15, 2023 with the Korean Intellectual Property Office, the disclosure of which is incorporated herein by reference in its entirety.

The present disclosure relates to a battery module and a battery pack including the same, and more particularly, to a battery module with improved cooling performance deviation and safety inside the battery module, and a battery pack including the same.

### [BACKGROUND]

With technology development of mobile devices, and an increase in demand therefor, demand for secondary batteries as energy sources has been rapidly increasing. A lot of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

Therefore, in order to overcome the above problems, at least two sub-modules may be electrically connected to form one long module, and a coolant such as insulating oil may be injected into the long module to directly cool the battery cells. Herein, the sub-module is a module in which a busbar assembly is mounted on a battery cell stack, and may mean components excluding the module frame in a conventional general battery module.

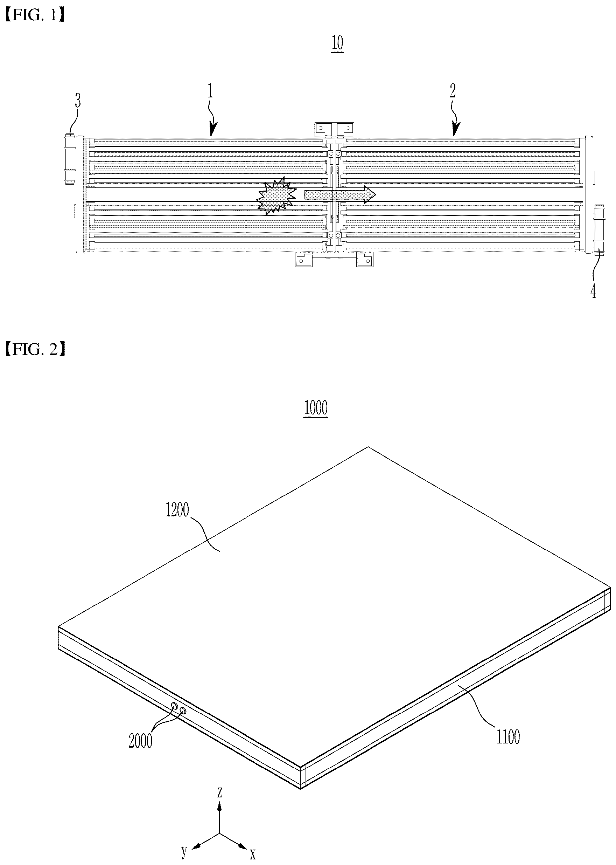

FIG. 1 is a perspective view illustrating a long module, which is a conventional battery module.

Referring to FIG. 1, a long module 10, which is a conventional battery module, includes a first sub-module 1 and a second sub-module 2.

Specifically, a coolant flows into the long module 10 via an inlet 3, sequentially passes through the first sub-module 1 and the second sub-module 2, and then discharges to the outside via an outlet 4, thereby capable of cooling the long module 10. In this case, the overall length of the long module 10 is longer than that of a conventional general battery module, and the coolant cools the first sub-module 1 preferentially, and then cools the second sub-module 2, so that a temperature difference may occur between the first sub-module 1 and the second sub-module 2.

In addition, the coolant moving in the inside of the long module 10 moves through one flow path as a whole, and therefore, when a flame occurs in the first sub-module 1, the flame may propagate to the adjacent second sub-module 2 by the coolant, which causes a problem that the possibility of explosion of the battery increases and the safety of the battery is reduced.

### [DETAILED DESCRIPTION OF THE INVENTION]

### [Technical Problem]

It is an object of the present disclosure to provide a battery module with improved cooling performance deviation and safety, and a battery pack including the same.

However, the problem to be solved by embodiments of the present disclosure is not limited to the above-mentioned problems, and can be variously expanded within the scope of the technical idea included in the present disclosure.

### [Technical Solution]

According to an embodiment of the present disclosure, there is provided a battery module comprising: a first sub-module and a second sub-module each including a battery cell stack in which a plurality of battery cells are stacked; a module frame in which the first sub-module and the second sub-module are housed; and a flame preventing member located between the first sub-module and the second sub-module, wherein one end of the first sub-module and the other end of the second sub-module are electrically connected to each other.

The flame preventing member may comprise a first flame preventing member located while facing the first sub-module, and a second flame preventing member located while facing the second sub-module.

The first flame preventing member may comprise a first support member located while being in contact with an upper surface and a lower surface of the module frame, and a first insulating member located while covering the outer peripheral surface of the first support member, and also located while facing the first sub-module, and the second flame preventing member may comprise a second support member located while being in contact with an upper surface and a lower surface of the module frame, and a second insulating member located while covering the outer peripheral surface of the second support member, and also located while facing the second sub-module.

The first support member may include a first support hole passing through the first support member, the first insulating member may include a first insulating hole passing through the first insulating member, the second support member may include a second support hole passing through the second support member, and the second insulating member may include a second insulating hole passing through the second insulating member.

The first support hole and the first insulating hole may be provided while facing each other at mutually corresponding positions, and the second support hole and the second insulating hole may be provided while facing each other at mutually corresponding positions.

The first support hole may be provided while passing through a central part of the first support member, and the second support hole may be provided while passing through both side surface portions of the second support member, respectively.

The second flame preventing member may include a protrusion part located so as to protrude from the second support member toward the first support member.

The protrusion part may be located between the second support holes provided on both side surface portions of the second support member, and be provided so as to protrude toward the first support hole.

The protrusion part may be provided while facing the first support hole at mutually corresponding positions.

The first support member may comprise a first support plate which is a plate in contact with the upper surface and the lower surface of the module frame, and a first flow part which is an area protruding from the first support plate toward the first sub-module, and the second support member may comprise a second support plate which is a plate in contact with the upper surface and the lower surface of the module frame, and a second flow part which is an area protruding from the second support plate toward the second sub-module.

The edges of the first support plate and the second support plate may be located while being in contact with each other.

The first flow part and the second flow part may be located so as to protrude in mutually opposite directions, and a flow area, which is a prescribed space in which a coolant can move, may be provided between the first flow part and the second flow part.

The first support member may include a first support protrusion part that protrudes in a direction perpendicular to the first support plate from one end and the other end of the first support plate, respectively, and the second support member may include a second support protrusion part that protrudes in a direction perpendicular to the second support plate from one end and the other end of the second support plate, respectively.

The first support protrusion part and the second support protrusion part may be located while being in contact with the upper surface and the lower surface of the module frame, respectively.

According to another embodiment of the present disclosure, there is provided a battery pack comprising the above-mentioned battery module.

### [Advantageous Effects]

According to embodiments, the cooling performance deviation of a battery can be improved and the safety can be enhanced.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a perspective view illustrating a long module, which is a conventional battery module.
FIG. 2 is a perspective view of a battery pack according to an embodiment of the present disclosure.
FIG. 3 is an exploded perspective view of the battery pack of FIG. 2.
FIG. 4 is a perspective view of a battery module according to an embodiment of the present disclosure.
FIG. 5 is an exploded perspective view of the battery module of FIG. 4.
FIG. 6 is a perspective view of a battery module according to an embodiment of the present disclosure.
FIG. 7 is a perspective view of the battery module excluding the module frame of FIG. 5.
FIG. 8 is a diagram illustrating a movement path of current in a battery module according to an embodiment of the present disclosure.
FIG. 9 is an exploded perspective view of a sub-module according to an embodiment of the present disclosure.
FIG. 10 is a perspective view of a flame preventing member according to an embodiment of the present disclosure. FIG. 10(a) is a perspective view illustrating a first surface of a flame preventing member, and FIG. 10(b) is a perspective view illustrating a second surface of a flame preventing member.
FIG. 11 is a perspective view of a first flame preventing member according to an embodiment of the present disclosure.
FIG. 12 is a perspective view of a first surface of a second flame preventing member according to an embodiment of the present disclosure.
FIG. 13 is a perspective view of a second surface of a second flame preventing member according to an embodiment of the present disclosure.
FIG. 14 is a perspective view illustrating the movement of coolant in a flame preventing member according to one embodiment of the present disclosure.
FIG. 15 is a perspective view illustrating the movement of coolant in a flame preventing member according to one embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

The terms first, second, etc. may be used herein to describe various components, but the components are not to be limited by the terms. The terms may only be used for the purpose of distinguishing one component from another.

Further, in this application, the upper part and the lower part may be defined as meaning the z-axis direction and the -z-axis direction, the side surface as meaning the y-axis direction and the -y-axis direction, and the front surface and the rear surface as meaning the x-axis direction and the -x-axis direction, respectively. However, these names are arbitrarily defined within the specification for convenience, and the scope of rights is not limited to such names and directions.

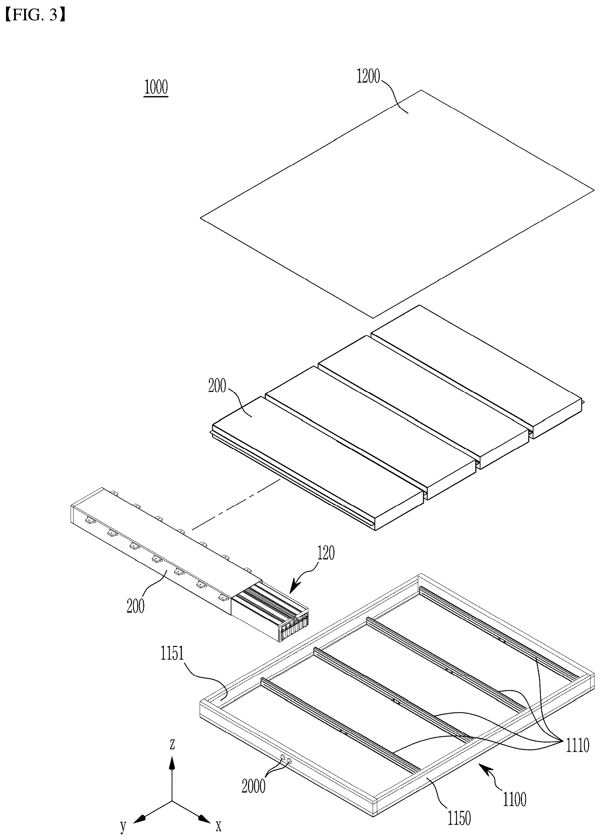

FIG. 2 is a perspective view of a battery pack according to an embodiment of the present disclosure. FIG. 3 is an exploded perspective view of the battery pack of FIG. 2.

Referring to FIGS. 2 and 3, a battery pack 1000 according to an embodiment of the present disclosure comprises a lower pack frame 1100 on which a plurality of battery modules 100 are mounted, an upper pack frame 1200 located at an upper part of the battery module 100, and at least one venting part 2000 provided on a side surface of the lower pack frame 1100. Herein, the lower pack frame 1100 and the upper pack frame 1200 may be joined to each other by a method such as welding to seal the inside of the battery pack 1000.

The battery module 100 may include a battery cell stack 120 in which a plurality of battery cells are stacked along a preset direction, and a module frame 200. The module frame 200 may be a mono frame in a metal plate shape in which the upper and lower surfaces (z-axis direction and -z-axis direction) and both side surfaces (y-axis direction and -y-axis direction) are integrated. The battery cell stack 120 may be mounted inside the module frame 200 to form the battery module 100.

The lower pack frame 1100 includes a side pack frame 1150 and at least two internal beams 1110 formed on the bottom surface of the lower pack frame 1100. Here, the bottom surface of the lower pack frame 1100 and the at least two internal beams 1110, and the bottom surface of the lower pack frame 1100 and the side pack frame 1150 may be joined to each other by a method such as welding.

A plurality of battery modules 100 may be mounted to an area partitioned from each other by a side pack frame 1150 and at least two internal beams 1110. In other words, a plurality of battery modules 100 may be respectively arranged in an area between the side pack frame 1150 and the internal beams 1110, and an area located between the internal beams 1110 adjacent to each other. More specifically, in the battery pack 1000, a battery module 100 may be arranged between a pair of internal beams 1110 located adjacent to each other among the plurality of internal beams 1110 and the side pack frame 1150.

Accordingly, the plurality of battery modules 100 are surrounded by at least two internal beams 1110 and the side pack frame 1150, so that each battery module 100 can be protected from external impacts.

The side pack frame 1150 may be arranged at the edge of the bottom surface of the lower pack frame 1100, and may be extended to an upper part (in the z-axis direction) from the bottom surface of the lower pack frame 1100. More specifically, it may be extended toward the upper part from each edge of the bottom surface of the lower pack frame 1100. Herein, the upper end of the side pack frame 1150 may be in contact with the upper pack frame 1200. At this time, the upper end of the side pack frame 1150 and the upper pack frame 1200 may be joined to each other by a method such as welding, thereby sealing the inside of the battery pack 1000.

The plurality of internal beams 1110 may be spaced apart from each other. Herein, the separation distance between internal beams 1110 adjacent to each other may be equal to or greater than the size of the battery module 100.

Further, the end of the internal beam 1110 may be in contact with the inner surface 1151 of the side pack frame 1150. More specifically, both ends of the internal beam 1110 may be in contact with the inner surface 1151 of the side pack frame 1150, respectively.

Next, a battery module 100 according to an embodiment of the present disclosure will be described in detail.

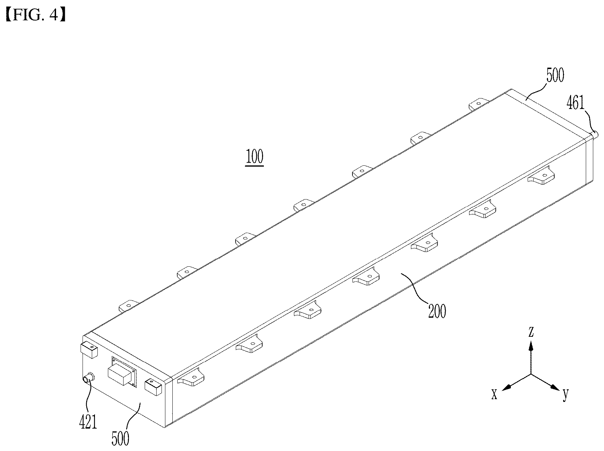

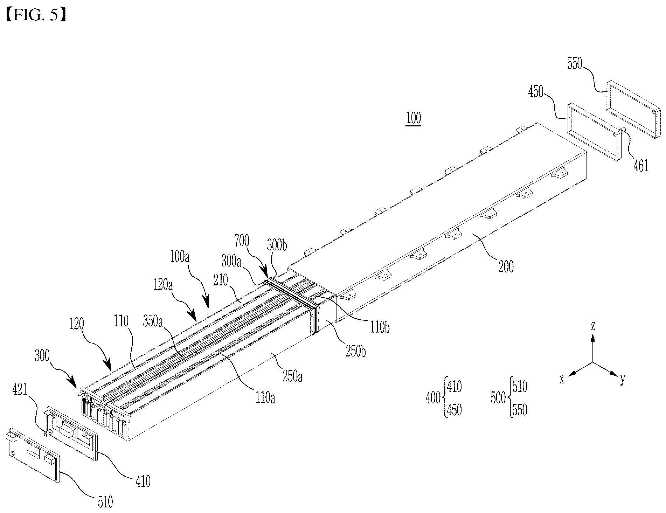

FIG. 4 is a perspective view of a battery module according to an embodiment of the present disclosure. FIG. 5 is an exploded perspective view of the battery module of FIG. 4.

Referring to FIGS. 4 and 5, the battery module 100 according to an embodiment of the present disclosure may be a module in which conventional general battery modules are electrically connected to each other to form one battery module 100. Specifically, the battery module 100 of the present embodiment may be a module in which one end and the other end of each battery cell stack constituting two conventional battery modules are electrically connected.

The battery module 100 comprises a battery cell stack 120 in which a plurality of battery cells 110 are stacked, a module frame 200 that houses the battery cell stack 120, a busbar assembly 300 located on a front surface and/or a rear surface of the battery cell stack 120, a sealing assembly 400 that covers a front surface and/or a rear surface of the busbar assembly 300, and an end plate 500 that covers a front surface and/or a rear surface of the sealing assembly 400.

First, the battery cell 110 may be a pouch-type battery cell. Such a pouch-type battery cell may be formed by housing an electrode assembly in a pouch case made of a laminate sheet including a resin layer and a metal layer, and then heat-fusing a sealing part of the pouch case. In this case, the battery cell 110 may be formed in a rectangular sheet-like structure.

Such battery cells 110 may be configured in a plurality of numbers, and the plurality of battery cells 110 are stacked so as to be electrically connected to each other, thereby forming a battery cell stack 120. In particular, a plurality of battery cells 110 may be stacked along a direction parallel to the y-axis as shown in FIG. 5.

The module frame 200 can be intended to protect the battery cell stack 120 and the electrical components connected thereto from external physical impacts. The module frame 200 may house the battery cell stack 120 and the electrical components connected thereto in the internal space of the module frame 200.

The structure of the module frame 200 may have various shapes. According to the present figure, the structure of the module frame 200 may be a mono frame structure. The mono frame can be manufactured by extrusion molding.

However, the structure of the module frame 200 is not limited thereto, and in another example, the module frame 200 may have a structure in which a U-shaped frame and an upper plate are coupled. In this case, the U-shaped frame may be formed such that the lower surface and both side surfaces of the module frame 200 are coupled and integrated. At this time, each frame or plate constituting the U-shaped frame may be manufactured by press molding. Further, the structure of the module frame 200 may be provided in a mono frame or an L-shaped frame structure in addition to a U-shaped frame, and may be provided in various structures that are not described in the above-mentioned examples.

The module frame 200 may be provided in a shape opened along the longitudinal direction (x-axis direction) of the battery cell stack 120. In this case, the front surface (x-axis direction) and the rear surface (-x-axis direction) of the battery cell stack 120 may be not hidden by a module frame 200. The front surface and the rear surface of the battery cell stack 120 may be hidden by a busbar assembly 300, a sealing assembly 400, or an end plate (500), etc., through which the front surface (x-axis direction) and the rear surface (-x-axis direction) of the battery cell stack 120 will be able to be protected from external physical impacts or the like.

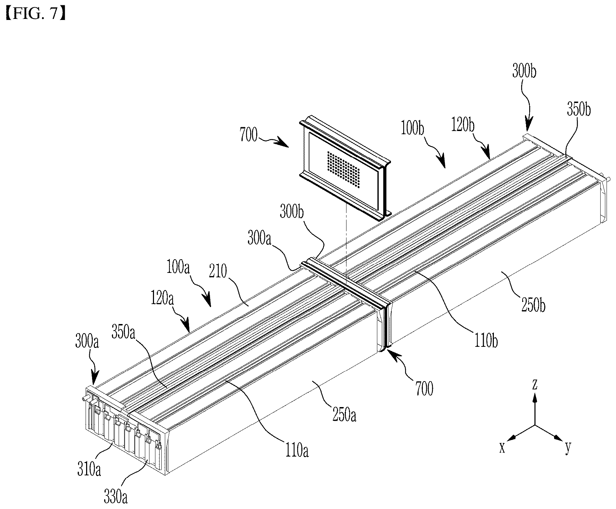

The busbar assembly 300 includes a busbar frame 310a described below, and busbars 330a and 330b (FIG. 7) mounted on one surface of the busbar frame 310a (FIG. 7). The busbar assembly 300 may be located on the opened first side (x-axis direction) and second side (-x-axis direction) of the module frame 200 to cover the battery cell stack 120. The busbar assembly 300 can electrically connect the battery cells 110 constituting the battery cell stack 120 in series or in parallel.

The sealing assembly 400 may be located on the opened first side (x-axis direction) and second side (-x-axis direction) of the module frame 200 to cover the battery cell stack 120. The sealing assembly 400 located on the opened first side of the module frame 200 may be a first sealing assembly 410, and the sealing assembly 400 located on the opened second side of the module frame 200 may be a second sealing assembly 450.

The sealing assembly 400 may separate the opened first side and second side of the module frame 200 from the external environment. Specifically, when a coolant is injected into the module frame 200, the sealing assembly 400 may perform the function to seal the coolant so as to prevent it from leaking to the outside.

Specifically, the sealing assembly 400 may include a sealing cover and an inlet 421 through which coolant flows in and an outlet 461. Specifically, the coolant may flow into the module frame 200 via the inlet 421, and then be discharged to the outside of the battery module 100 via the outlet 461. The coolant may be in direct contact with the battery cell stack 120, other electrical components, and the busbar assembly 300 mounted inside the module frame 200, and receive transfer of heat generated therefrom. Therefore, the coolant can cool the battery module 100 while circulating inside the battery module 100.

The coolant may be a fluid. However, the coolant needs to be electrically insulated because it is in direct contact with the battery cell stack 120, other electrical components, and the busbar assembly 300 within the battery module 100. Therefore, the coolant may be a material that has insulating properties. In one example, the coolant may be insulating oil.

As mentioned above, the coolant is in direct contact with the battery cell stack 120, other electrical components, and the busbar assembly 300 that generate heat within the battery module 100, and can directly cool them while receiving transfer of heat. Therefore, as compared to the conventional method of indirectly cooling the battery module using a heat sink, etc., the cooling efficiency of the battery can be improved, and thus the battery life can be extended.

The end plate 500 may be located on the opened first side (x-axis direction) and the second side (-x-axis direction) of the module frame 200, and formed to cover the sealing assembly 400. The end plate 500 located on the opened first side of the module frame 200 may be a first end plate 510, and the end plate 500 located on the opened second side of the module frame 200 may be a second end plate 550.

Such an end plate 500 may physically protect the battery cell stack 120 and other electrical components from external impacts.

Next, each sub-module constituting the battery module 100 of the present embodiment will be described in more detail.

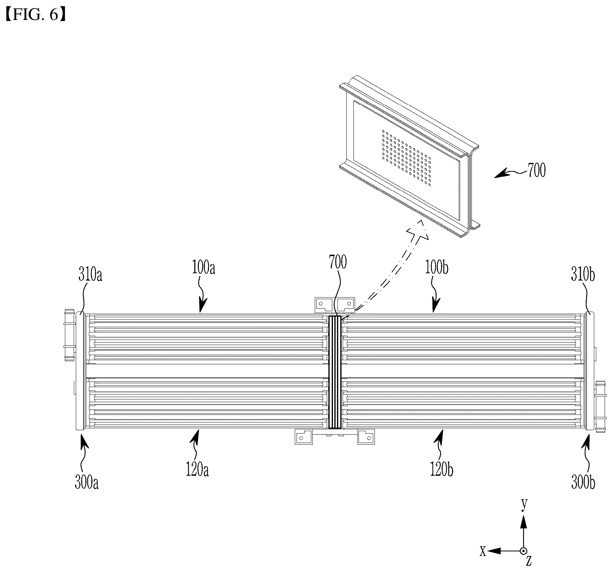

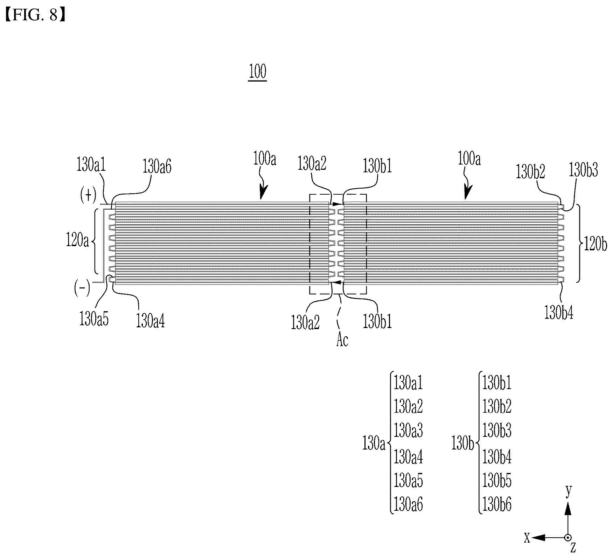

FIG. 6 is a perspective view of a battery module according to an embodiment of the present disclosure. FIG. 7 is a perspective view of the battery module excluding the module frame of FIG. 5. FIG. 8 is a diagram illustrating a movement path of current in a battery module according to an embodiment of the present disclosure.

Referring to FIGS. 6 and 7, the battery module 100 according to an embodiment of the present disclosure may include a first sub-module 100a, a second sub-module 100b, and a flame preventing member 700. Herein, the battery module 100 may be a module in which a first sub-module 100a and a second sub-module 100b are electrically connected to each other.

The first sub-module 100a and the second sub-module 100b may each include battery cell stacks 120a and 120b in which a plurality of battery cells are stacked, and busbar assemblies 300a and 300b including busbars 330a and 330b electrically connected with the battery cell stacks 120a and 120b and busbar frames 310a and 310b covering the battery cell stacks 120a and 120b on at least one side.

That is, the first sub-module 100a and the second sub-module 100b each include the same configuration.

The flame preventing member 700 can prevent a flame from propagating to the second sub-module 100b when the flame occurs in the first sub-module 100a.

Specifically, the flame preventing member 700 can be located between the first sub-module 100a and the second sub-module 100b. The flame preventing member 700 is located between the other end (-x-axis direction) of the first sub-module 100a and one end (x-axis direction) of the second sub-module 100b, thereby allowing only the coolant to move from the first sub-module 100a to the second sub-module 100b, and preventing the movement of flames, and the like.

Referring to FIG. 8, the area where the first sub-module 100a and the second sub-module 100b are electrically connected can be defined as a connection area Ac. The connection structure and current flow of the electrode leads 130a and 130b at one end of the first sub-module 100a, the other end of the second sub-module 100b, and the connection area Ac will be described in detail below.

The first outermost electrode lead 130a1 located at one end of the first sub-module 100a and the first electrode lead 130a6 located adjacent thereto are electrically connected to the outside so that current can be supplied to the first sub-module 100a and the second sub-module 100b. In this case, current is supplied to the first submodule 100a from the outside, however, since the first electrode lead 130a and the second electrode lead 130b are electrically connected in the connection area Ac, current can also flow to the second sub-module 100b.

In the connection area Ac, a first electrode lead 130a located at the outermost part of the first battery cell stack 120a of the first sub-module 100a and a second electrode lead 130b located at the outermost part of the second battery cell stack 120b of the second sub-module 100b are electrically connected to each other. Specifically, the outermost first electrode leads 130a2 and 130a3 located at the other end of the first sub-module 100a are electrically connected to the outermost second electrode leads 130b1 and 130b5 located at one end of the second sub-module 100b.

In this case, the electrode leads except the outermost first electrode leads 130a2 and 130a3 and the outermost second electrode leads 130b1 and 130b5 can be electrically connected to adjacent electrode leads, respectively. More specifically, at the other end of the first sub-module 100a, the first electrode leads except the outermost first electrode leads 130a2 and 130a3 can be electrically connected while forming a pair with adjacent first electrode leads. Similarly, even at one end of the second sub-module 100b, the second electrode leads except the outermost second electrode leads 130b1 and 130b5 can be electrically connected while forming a pair with adjacent second electrode leads.

At one end of the first sub-module 100a that is not the connection area Ac, the remaining first electrode leads, except the first outermost electrode lead 130a1 and the first electrode lead 130a6 adjacent thereto, which are electrically connected to an external power source, can be electrically connected to adjacent first electrode leads. In one example, the adjacent first electrode leads can be electrically connected while forming a pair.

At the other end of the second sub-module 100b that is not the connection area Ac, adjacent second electrode leads may be electrically connected. In one example, adjacent second electrode leads may be electrically connected while forming a pair. Herein, the second outermost electrode leads 130b2 and 130b4 located at the other end of the second sub-module 100b may also be electrically connected while forming a pair with adjacent second electrode leads.

As described above, when the electrical connection of the electrode leads 130a and 130b is formed, electrical current can move along the electrical connection of these electrode leads 130a and 130b.

That is, the arrows in this figure indicate the flow of current, but the flow of current is not limited to those described in this figure, and anything is possible if a person skilled in the art can easily change the current flow by changing the electrical connections of the electrode leads.

Referring again to FIGS. 6 to 8, in this case, the flame preventing member 700 can be located between the first sub-module 100a and the second sub-module 100b without being in contact with the outermost first electrode leads 130a2 and 130a3 and the outermost second electrode leads 130b1 and 130b5.

That is, only the outermost first electrode leads 130a2 and 130a3 and the outermost second electrode leads 130b1 and 130b5 are electrically connected to each other, and therefore, even if the flame preventing member 700 is located between the first sub-module 100a and the second sub-module 100b, their electrical flow may not be interrupted or disturbed.

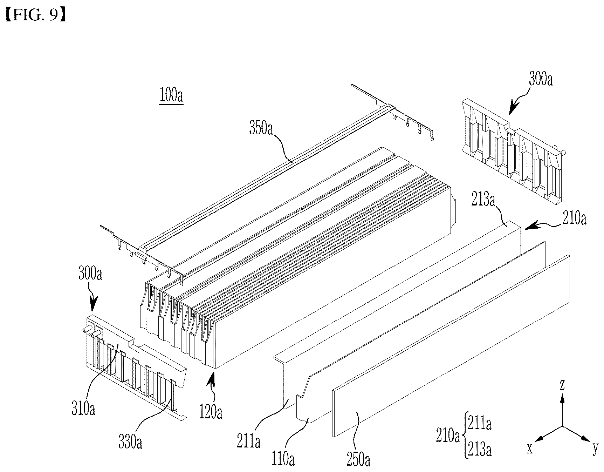

FIG. 9 is an exploded perspective view of a sub-module according to an embodiment of the present disclosure.

As described above, since the first sub-module 100a and the second sub-module 100b each include the same configuration, only the first sub-module 100a will be described below.

Referring to FIG. 9, the first sub-module 100a includes a first battery cell stack 120a in which a plurality of battery cells are stacked, a first busbar assembly 300a that covers the front surface (x-axis direction) and the rear surface (-x-axis direction) of the first battery cell stack 120a, and a first flexible printed circuit board (FPCB) 350a electrically connected to the first busbar assembly 300a.

The first battery cell stack 120a is formed by stacking a plurality of first battery cells 110a. The first battery cell stack 120a includes a first compression pad 250a provided on one surface of the first outermost battery cell 110a. The first battery cell stack 120a also includes a first cooling fin 210a located between the plurality of first battery cells 110a and between the first battery cell 110a and the first compression pad 250a.

The first cooling fin 210a may be located between a plurality of first battery cells 110a. For example, the first cooling fin 210a may be located between two first battery cells 110a. Specifically, another first cooling fin 210a adjacent to one first cooling fin 210a may be located with the two first battery cells 110a interposed between them. Alternatively, the first cooling fin 210a may be located between the outermost first battery cell 110a and the first compression pad 250a.

In this case, the first cooling fin 210a may include a cooling plate 211a in contact with one side surface of the first battery cell 110a. Herein, the one side surface of the first battery cell 110a may be one surface of the battery cell 110 that extends along the longitudinal direction (x-axis direction) of the first battery cell 110a. One surface of the cooling plate 211a may be in contact with one surface of the first battery cell 110a that faces one surface of the cooling plate 211a.

The other surface of the cooling plate 211a may be in contact with one surface of another adjacent first battery cell 110a or one surface of the first compression pad 250a while facing the other surface of the cooling plate 211a. In this case, although not shown in the figure, an adhesive is interposed between the side surface of the first battery cell 110a and the cooling plate 211a, or between one surface of the first compression pad 250a and the cooling plate 211a, so that the first battery cell 110a and the cooling plate 211a can be adhesively fixed. For example, the adhesive may be an insulating tape.

The upper surface (z-axis direction) of the cooling plate 211a can be in contact with the upper surface (z-axis direction) of the module frame 200 of FIG. 5, and the lower surface (-z-axis direction) of the cooling plate 211a can be in contact with the lower surface (-z-axis direction) of the module frame 200 of FIG. 5. Therefore, the first cooling fin 210a can be fixed and located within the module frame 200, and thereby the first battery cell 110a attached to the first cooling fin 210a can also be fixed and located within the module frame 200.

The size of the cooling plate 211a may be larger than the size of the first battery cell 110a. That is, the height (z-axis direction) of the cooling plate 211a may be larger than the height of the first battery cell 110a. In this case, the first battery cell 110a may be attached onto the cooling plate 211a and located as if it floats in the inside of the module frame without contacting the module frame. Specifically, the upper part and the lower part of the first battery cell 110a may be located while having a prescribed height from the upper part and the lower part of the module frame 200. More specifically, when the height (z-axis direction) of the cooling plate 211a is higher than the height (z-axis direction) of the first battery cell 110a, the first battery cell 110a may be located at the central part of the cooling plate 211a and adhesively fixed thereto.

The first cooling fin 210a may further include a cooling plate 211a and a cooling fin protrusion part 213a in which one end of the cooling plate 211a protrudes.

The cooling fin protrusion part 213a may be an area that protrudes in a direction perpendicular to the cooling plate 211a. The cooling fin protrusion part 213a may be in contact with the upper surface of the module frame 200 of FIG. 5. Specifically, one surface of the cooling fin protrusion part 213a may be in contact with the upper surface of the module frame 200 of FIG. 5, and the other surface of the cooling fin protrusion part 213a may be located while facing the upper surface of the first battery cell 110a. In one example, the first cooling fin 210a may be L-shaped. Consequently, the first cooling fin 210a may be more firmly fixed and located within the module frame 200.

However, the shape of the first cooling fin 210a is not limited to those illustrated in this figure, and may be a flat plate shape. That is, the first cooling fin 210a may have any shape as long as it can fix the first battery cell 110a while being in contact with the first battery cell 110a. For example, the cooling fin protrusion part 213a may protrude from the other end of the cooling plate 211a to contact the lower surface of the module frame, and may be located while facing the lower surface of the first battery cell 110a. Alternatively, the cooling fin protrusion part 213a may be formed to be protruded from both one end and the other end of the cooling plate 211a.

The first cooling fin 210a may be a metal. Specifically, the first cooling fin 210a may be a metal having high thermal conductivity. Therefore, the first cooling fin 210a can directly receive transfer of heat generated from the first battery cell 110a due to charging and discharging of the battery. When heat is generated, the first battery cell 110a is primarily cooled while heat being transferred to the first cooling fin 210a in contact with the side surface of the first battery cell 110a, and the coolant is in direct contact with the upper part and the lower part of the first battery cell 110a so that the first battery cell 110a may be secondarily cooled. Thereby, direct cooling is possible even for the upper edge and lower edge areas of the battery cell, which were relatively difficult to cool in a conventional case, thereby improving the cooling efficiency of the battery.

The first compression pad 250a may be located at the outermost part of the first battery cell stack 120a. When the first battery cell 110a swells due to charging and discharging, the first compression pad 250a may play a role in absorbing the swelling. Specifically, the first compression pad 250a may push the side surface of the module frame 200 of FIG. 5 while the first battery cell 110a is swelling, thereby preventing the battery case of the first battery cell 110a from being cracked, and thus improving the safety of the battery.

However, the first compression pad 250a is not limited to being located only on the outermost part of the first battery cell stack 120a, and may also be located between the first battery cells 110a constituting the first battery cell stack 120a.

The first busbar assembly 300a includes a first busbar frame 310a, and a first busbar 330a mounted on the first busbar frame 310a.

The first busbar frame 310a may be located on one surface of the first battery cell stack 120a to cover one surface of the first battery cell stack 120a and, at the same time, guide the connection between the first battery cell stack 120a and an external device. The first busbar frame 310a may be located on the front surface (x-axis direction) and the rear surface (-x-axis direction) of the first battery cell stack 120a. A first busbar 330a may be mounted on the first busbar frame 310a. Specifically, the inner surface of the first busbar frame 310a may be connected to the front surface (x-axis direction) and the rear surface (-x-axis direction) of the first battery cell stack 120a, and the outer peripheral surface of the first busbar frame 310a may be connected to the first busbar 330a.

The first busbar frame 310a may include an electrically insulating material. The first busbar frame 310a may limit contact of the first busbar 330a with other portions of the first battery cells 110a other than the portion joined with an electrode lead (not shown), and may also prevent occurrence of an electrical short circuit.

The first busbar 330a is mounted on one surface of the first busbar frame 310a, and may electrically connect the first battery cell stack 120a or the first battery cells 110a to an external device circuit. The first busbar 330a is located on the first busbar frame 310a, and the first busbar assembly 300a is covered by the sealing assembly 400 and the end plate 500 of FIG. 5, so that it can be protected from external impacts, etc., and the deterioration of the battery durability due to external moisture, etc. can be minimized.

The first busbar 330a can be electrically connected to the first battery cell stack 120a via the electrode lead of the first battery cell 110a. Specifically, the electrode lead of the first battery cell 110a may pass through a slit formed in the first busbar frame 310a and then be bent to connect to the first busbar 330a. The first battery cells 110a constituting the first battery cell stack 120a can be connected in series or in parallel by the first busbar 330a.

The first flexible printed circuit board 350a extends in the longitudinal direction of the first battery cell stack 120a, and is mounted on one surface of the first battery cell stack 120a to sense the first battery cell 110a. Specifically, the first flexible printed circuit board 350a can be located while being in contact with a battery cell located at the central part of the first battery cell stack 120a among the battery cells forming the first battery cell stack 120a. The first flexible printed circuit board 350a senses electrical and thermal data of the first battery cell 110a while being seated on the upper surface (z-axis direction) of the first battery cell stack 120a. In addition, the first flexible printed circuit board 350a is electrically connected to the first busbar 330a while being bent toward the first busbar frame 310a at the end of the first battery cell stack 120a.

Next, the flame preventing member 700 provided between the first sub-module 100a and the second sub-module 100b will be described in more detail.

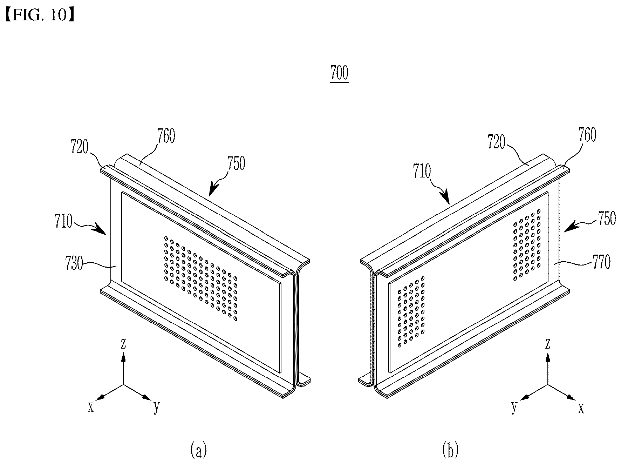

FIG. 10 is a perspective view of a flame preventing member according to an embodiment of the present disclosure. FIG. 10(a) is a perspective view illustrating a first surface of a flame preventing member, and FIG. 10(b) is a perspective view illustrating a second surface of a flame preventing member.

Referring to FIGS. 5, 7 and 10, a flame preventing member according to an embodiment of the present disclosure includes a first flame preventing member 710 and a second flame preventing member 750.

The first flame preventing member 710 and the second flame preventing member 750 are located between the first sub-module 100a and the second sub-module 100b while being coupled to each other, thereby capable of preventing flames, and the like generated in one sub-module from moving to adjacent sub-modules.

The first flame preventing member 710 may be located while facing the first sub-module 100a, and the second flame preventing member 750 may be located while facing the second sub-module 100b. Also, the first flame preventing member 710 and the second flame preventing member 750 may be located while being in contact each other. Specifically, one surface of the first flame preventing member 710 may be located while facing the first sub-module 100a, and the other surface of the first flame preventing member 710 may be located while being in contact with one surface of the second flame preventing member 750. One surface of the second flame preventing member 750 may be located while being in contact with the other surface of the first flame preventing member 710, and the other surface of the second flame preventing member 750 may be located while facing the second sub-module 100b.

The first flame preventing member 710 and the second flame preventing member 750 may be located while being in contact with the upper surface (z-axis direction) and the lower surface (-z-axis direction) of the module frame 200. In this case, the height (z-axis direction) of the first flame preventing member 710 and the second flame preventing member 750 may correspond to the height of the module frame 200. Specifically, the height of the first flame preventing member 710 and the second flame preventing member 750 may be equal to the distance to the upper surface and the lower surface of the module frame 200.

The first flame preventing member 710 includes a first support member 720 located while being in contact with the upper surface and the lower surface of the module frame. In this case, the first support member 720 may be provided with a first insulating member 730. Specifically, the outer peripheral surface of the first support member 720 facing the first sub-module may be provided with a first insulating member 730 to maintain insulation property with the first sub-module. The first insulating member 730 may be located while covering the entire outer peripheral surface of the first support member 720.

The second flame preventing member 750 includes a second support member 760 located while being in contact with the upper surface and the lower surface of the module frame. In this case, the second support member 760 may be provided with a second insulating member 770. Specifically, the outer peripheral surface of the second support member 760 facing the second sub-module may be provided with a second insulating member 770 to maintain insulation property with the second sub-module. The second insulating member 770 may be located while covering the entire outer peripheral surface of the second support member 760.

Next, the first flame preventing member 710 and the second flame preventing member 750 will be described in more detail.

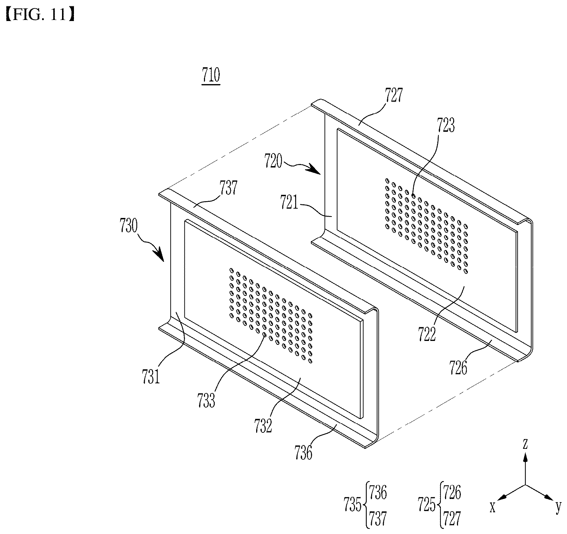

FIG. 11 is a perspective view of a first flame preventing member according to an embodiment of the present disclosure.

Referring to FIGS. 5, 7 and 11, a first flame preventing member 710 according to an embodiment of the present disclosure includes a first support member 720, and a first insulating member 730 located while covering an outer peripheral surface of the first support member 720.

The first support member 720 can configured to fix and locate the first flame preventing member 710 within the module frame 200.

The first support member 720 may include a first support plate 721, a first flow part 722, and a first support hole 723.

The first support plate 721 may be located while being in contact with the upper surface (z-axis direction) and the lower surface (-z-axis direction) of the module frame 200, so that the first flame preventing member 710 is fixed and located within the module frame 200.

The first support plate 721 includes a first flow part 722, which is an area located at the central part of the first support plate 721, and a first support hole 723 passing through the first support plate 721.

The first flow part 722 may be an area spaced apart from the central part while having a prescribed distance from the four edges constituting the first support plate 721. The first flow part 722 may be an area protruding from the first support plate 721 toward the first sub-module 100a. Specifically, in the battery module 100 according to the present disclosure, the coolant may move from the first sub-module 100a to the flame preventing member 700, and the first flow part 722 may be an area that protrudes in the opposite direction to the movement direction of the coolant.

The first support hole 723 may be at least one hole passing through the first support plate 721. Specifically, the first support hole 723 may be provided while passing through the first flow part 722. More specifically, the first support hole 723 may be provided while passing through the central part of the first support member 720. The first support hole 723 may be provided while passing through the central part of the first support plate 721. The first support hole 723 may be located while passing through the central part of the first flow part 722. In this case, the coolant moving in the inside of the module frame 200 may move while passing through the first flame preventing member 710 via the first support hole 723.

The first support member 720 may include a first support protrusion part 725 which is a surface protruding from the first support plate 721. The first support protrusion part 725 is located while being in contact with the upper surface (z-axis direction) and the lower surface (-z-axis direction) of the module frame 200, so that the first support member 720 can be more stably fixed and located within the module frame 200.

The first support protrusion part 725 may be a plate that protrudes and extends in a surface perpendicular to the first support plate 721.

The first support protruding part 725 may include a 1-1 support protrusion part 726 and a 1-2 support protrusion part 727 which are respectively located at one end and the other end of the first support plate 721.

The 1-1 support protrusion part 726 may be a plate that protrudes and extends in a direction perpendicular to the first support plate 721 from one end (-z-axis direction) of the first support plate 721. The 1-1 support protrusion part 726 may be a plate that extends in a direction parallel to the lower surface (-z-axis direction) of the module frame 200. Therefore, one surface of the 1-1 support protrusion part 726 may be located while being in contacting with the lower surface of the module frame 200. In this case, although not disclosed in this figure, an adhesive member may be provided on one surface of the 1-1 support protrusion part 726 to be adhesively fixed to the lower surface of the module frame 200.

The 1-2 support protrusion part 727 may be a plate that extends in a direction perpendicular to the first support plate 721 from the other end (z-axis direction) of the first support plate 721. The 1-2 support protrusion part 727 may be a plate that extends in a direction parallel to the upper surface (z-axis direction) of the module frame 200. Therefore, one surface of the 1-2 support protrusion part 727 may be located while being in contact with the upper surface of the module frame 200. In this case, although not disclosed in this figure, one surface of the 1-2 support protrusion part 727 may be provided with an adhesive member to be adhesively fixed to the upper surface of the module frame 200.

The other surface of the 1-1 support protrusion part 726 that does not come into contact with the lower surface of the module frame 200, and the other surface of the 1-2 support protrusion part 727 that does not come into contact with the upper surface of the module frame 200 may be located while facing each other.

The 1-1 support protrusion part 726 and the 1-2 support protrusion part 727 may be provided so as to protrude in a direction equal to each other. Specifically, the 1-1 support protrusion part 726 and the 1-2 support protrusion part 727 may be provided so as to protrude in the direction toward the first sub-module 100a, and also may be provided so as to protrude in the opposite direction to the direction of movement of the coolant in the inside of the battery module 100.

Since the first support protrusion part 725 is provided so as to protrude from the upper part and the lower part of the first support plate 721, the first flame preventing member 710 can be more stably fixed and located within the module frame 200 in the inside of the battery module 100.

The first support member 720 can be formed of metal. For example, the first support member 720 can be formed of aluminum(Al). Therefore, the first support member 720 can improve the mechanical rigidity of the battery module 100 according to the present disclosure. In addition, a partial area of the first support member 720 can come into contact with the coolant circulating in the inside of the battery module 100, thereby cooling the coolant and improving the cooling performance of the battery module 100.

A first insulating member 730 may be located on the outer peripheral surface of the first support member 720. Specifically, a first insulating member 730 may be located on the outer peripheral surface of the first support member 720 facing the first sub-module 100a. More specifically, the first insulating member 730 may be located while covering the outer peripheral surface of the first support plate 721 facing the first sub-module 100a and the first support protrusion part 725 that does not come into contact with the module frame 200. At this time, the first insulating member 730 may be provided while having a shape corresponding to the first support member 720.

Since the first insulating member 730 is located while covering the outer peripheral surface of the first support member 720, it may have a shape corresponding to the shape of the first support member 720. Specifically, the first insulating member 730 may include a first insulating plate 731, a first insulating flow part 732, and a first insulating hole 733.

The first insulating plate 731 may be one area of the first insulating member 730 that is located while covering the first support plate 721. The first insulating plate 731 may include a first insulating flow part 732, which is one area located at the central part of the first insulating plate 731. In this case, the first insulating flow part 732 may be one area of the first insulating member 730 that is located in an area corresponding to the first flow part 722. Therefore, the first insulating flow part 732 may be one area that protrudes from the first insulating plate 731 toward the first sub-module 100a, and also may be one area that protrudes in a direction opposite to the direction of movement of the coolant.

The first insulating flow part 732 may be provided with a first insulating hole 733. The first insulating hole 733 may be provided while facing each other at a position corresponding to the first support hole 723. Therefore, the number of the first insulating holes 733 may be equal to the number of the first support holes 723, and the size of the first insulating hole 733 may be equal to the size of the first support hole 723. In this case, the coolant may move while passing through the first insulating hole 733 and the first support hole 723 in sequence.

The first insulating member 730 may include a first insulating protrusion part 735, which is a surface that protrudes vertically from the first insulating plate 731. Since the first insulating protrusion part 735 is located while covering the first support protrusion part 725, the shape of the first insulating protrusion part 735 may correspond to the shape of the first support protrusion part 725.

The first insulating protrusion part 735 may include a 1-1 insulating protrusion part 736 and a 1-2 insulating protrusion part 737 located at one end and the other end of the first insulating plate 731, respectively.

The 1-1 insulating protrusion part 736 may be a plate that protrudes and extends from one end (-z-axis direction) of the first insulating plate 731 in a direction perpendicular to the first insulating plate 731. The 1-1 insulating protrusion part 736 may be a plate that extends in a direction parallel to the lower surface (-z-axis direction) of the module frame 200. One surface of the 1-1 insulating protrusion part 736 may be located while being in contact with the 1-1 support protrusion part 726. In this case, although not disclosed in this figure, one surface of the 1-1 insulating protrusion part 736 may be provided with an adhesive member to be adhesively fixed to the 1-1 support protrusion part 726.

The 1-2 insulating protrusion part 737 may be a plate that protrudes and extends in a direction perpendicular to the first insulating plate 731 from the other end (z-axis direction) of the first insulating plate 731. The 1-2 insulating protrusion part 737 may be a plate that extends in a direction parallel to the upper surface (z-axis direction) of the module frame 200. One surface of the 1-2 insulating protrusion part 737 may be located while being in contact with the 1-2 support protrusion part 727. In this case, although not disclosed in this figure, an adhesive member may be provided on one surface of the 1-2 insulating protrusion part 737 to be adhesively fixed to the 1-2 support protrusion part 727.

The other surface of the 1-1 insulating protrusion part 736 that does not come into contact with the 1-1 support protrusion part 726, and the other surface of the 1-2 insulating protrusion part 737 that does not come into contact with the 1-2 supporting protrusion part 727 may be located while facing each other.

The 1-1 insulating protrusion part 736 and the 1-2 insulating protrusion part 737 may be provided so as to protrude in the same direction. Specifically, the 1-1 insulating protrusion part 736 and the 1-2 insulating protrusion part 737 may be provided so as to protrude in a direction toward the first sub-module 100a, and also may be provided so as to protrude in a direction opposite to the direction of movement of the coolant within the battery module 100.

The first insulating member 730 may include an electrically insulating material. Therefore, even if the first support member 720 comes into contact with the battery cell stacks 120a and 120b or busbar assemblies 300a and 300b that constitute the first sub-module 100a and the second sub-module 100b, electrical insulation property is maintained between them, thereby ensuring the safety of the battery.

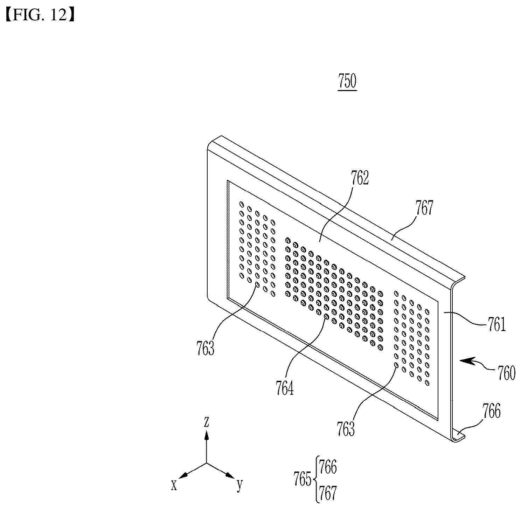

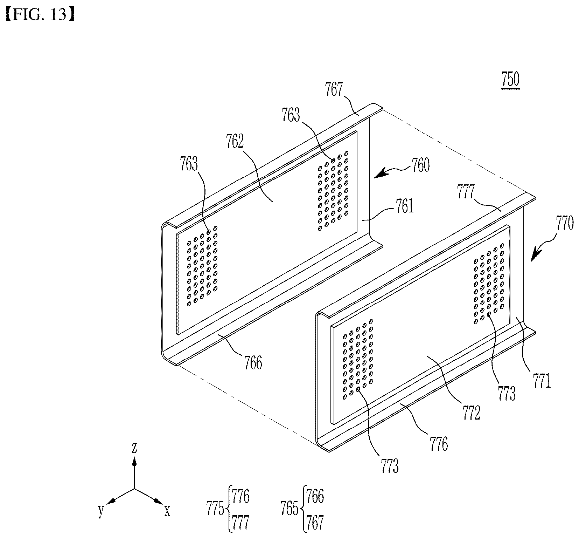

FIG. 12 is a perspective view of a first surface of a second flame preventing member according to an embodiment of the present disclosure. FIG. 13 is a perspective view of a second surface of a second flame preventing member according to an embodiment of the present disclosure.

Referring to FIGS. 12 and 13, a second flame preventing member 750 according to an embodiment of the present disclosure includes a second support member 760 and a second insulating member 770 located while covering an outer peripheral surface of the second support member 760.

The second support member 760 may be configured to fix and locate the second flame preventing member 750 within the module frame 200.

The second support member 760 can include a second support plate 761, a second flow part 762, a second support hole 763, and a protrusion part 764.

The second support plate 761 is located while being in contact with the upper surface (z-axis direction) and the lower surface (-z-axis direction) of the module frame 200, so that the second flame preventing member 750 may be fixed and located within the module frame 200.

The second support plate 761 includes a second flow part 762 which is one area located at the central part of the second support plate 761, a second support hole 763 passing through the second support plate 761, and a protrusion part 764 located between the second support holes 763.

The second flow part 762 may be one area spaced apart from the central part while having a prescribed distance from the four edges constituting the second support plate 761. The second flow part 762 may be one area protruding from the second support plate 761 toward the second sub-module 100b. Specifically, in the battery module 100 according to the present disclosure, the coolant may move from the flame preventing member 700 to the second sub-module 100b, and the second flow part 762 may be one area protruding in the direction of movement of the coolant.

The second support hole 763 may be at least one hole passing through the second support member 760. The second support hole 763 may be at least one hole passing through the second support plate 761. Specifically, the second support hole 763 may be provided while passing through the second flow part 762. More specifically, the second support hole 763 may be provided while passing through the two side surface portions of the second support member 760, respectively. The second support hole 763 may be provided while passing through the two side surface portions of the second support plate 761, respectively. The second support hole 763 may be provided while passing through the two side surface portions (in the y-axis direction and the - y-axis direction) of the second flow part 762. That is, the second support hole 763 may be divided and located into two regions within the second flow part 762. In this case, the coolant moving in the inside of the module frame 200 can move while passing through the second flame preventing member 750 through the second support hole 763.

The protrusion part 764 may be located so as to protrude from the second support member 760 toward the first support member 720. Specifically, the protrusion part 764 may be located on the second flow part 762 and between the second support holes 763. More specifically, the protrusion part 764 may be located at the central part of the second flow part 762. The protrusion part 764 may be located at the central part of the second flow part 762 further than the second support hole 763.

The protrusion part 764 may be one area that protrudes from the second flow part 762. The protrusion part 764 may be one area that protrudes from the second flow part 762 in the opposite direction of the second sub-module 100b. Specifically, the protrusion part 764 may be one area that protrudes in the opposite direction to the direction of movement of the coolant.

The coolant moving from the first flame preventing member 710 to the second flame preventing member 750 may change from a laminar flow state to a turbulent flow state while being in contact with the protrusion part 764. In this case, since the state of the coolant changes from laminar flow to turbulent flow, the heat transfer coefficient of the coolant may be improved. Therefore, since the coolant moves from the first sub-module 100a to the second sub-module 100b in a state improved in heat transfer efficiency, the temperature difference between the sub-modules 100a and 100b may be eliminated, and the cooling performance of the battery may be improved.

The second support member 760 may include a second support protrusion part 765, which is a surface protruding from the second support plate 761. The second support protrusion part 765 is located while being in contact with the upper surface (z-axis direction) and the lower surface (-z-axis direction) of the module frame 200, so that the second support member 760 can be more stably fixed and located within the module frame 200.

The second support protrusion part 765 may be a plate that protrudes and extends in a surface perpendicular to the second support plate 761.

The second support protrusion part 765 may include a 2-1 support protrusion part 766 and a 2-2 support protrusion part 767 that are located at one end and the other end of the second support plate 761, respectively.

The 2-1 support protrusion part 766 may be a plate that protrudes and extends in a direction perpendicular to the second support plate 761 from one end (-z-axis direction) of the second support plate 761. The 2-1 support protrusion part 766 may be a plate that extends in a direction parallel to the lower surface (-z-axis direction) of the module frame 200. Therefore, one surface of the 2-1 support protrusion part 766 may be located while being in contact with the lower surface of the module frame 200. In this case, although not disclosed in this figure, one surface of the 2-1 support protrusion part 766 may be provided with an adhesive member so as to be adhesively fixed to the lower surface of the module frame 200.

The 2-2 support protrusion part 767 may be a plate that protrudes and extends in a direction perpendicular to the second support plate 761 from the other end (z-axis direction) of the second support plate 761. The 2-2 support protrusion part 767 may be a plate that extends in a direction parallel to the upper surface (z-axis direction) of the module frame 200. Therefore, one surface of the 2-2 support protrusion part 767 can be located while being in contact with the upper surface of the module frame 200. In this case, although not disclosed in this figure, one surface of the 2-2 support protrusion part 767 may be provided with an adhesive member so as to be adhesively fixed to the upper surface of the module frame 200.

The other surface of the 2-1 support protrusion part 766 that does not come into contact with the lower surface of the module frame 200, and the other surface of the 2-2 support protrusion part 767 that does not come into contact with the upper surface of the module frame 200 may be located while facing each other.

The 2-1 support protrusion part 766 and the 2-2 support protrusion part 767 may be provided so as to protrude in the same direction. Specifically, the 2-1 support protrusion part 766 and the 2-2 support protrusion part 767 may be provided so as to protrude in the direction toward the second sub-module 100b, and may be provided so as to protrude in the direction of movement of the coolant within the battery module 100.

Since the second support protrusion part 765 is provided so as to protrude from the upper part and the lower part of the second support plate 761, the second flame preventing member 750 may be more stably fixed and located within the module frame 200 in the inside of the battery module 100.

The second support member 760 may be formed of metal. For example, the second support member 760 may be formed of aluminum(Al). Therefore, the second support member 760 may improve the mechanical rigidity of the battery module 100 according to the present disclosure. Further, a partial area of the second support member 760 may come into contact with the coolant circulating in the inside of the battery module 100, thereby cooling the coolant and improving the cooling performance of the battery module 100.

A second insulating member 770 may be located on the outer peripheral surface of the second support member 760. Specifically, a second insulating member 770 may be located on the outer peripheral surface of the second support member 760 facing the second sub-module 100b. More specifically, the second insulating member 770 may be located while covering the outer peripheral surface of the second support plate 761 facing the second sub-module 100b and the second support protrusion part 765 that does not come into contact with the module frame 200. At this time, the second insulating member 770 may be provided while having a shape corresponding to that of the second support member 760.

The second insulating member 770 is located while covering the outer peripheral surface of the second support member 760, and thus may have a shape corresponding to the shape of the second support member 760. Specifically, the second insulating member 770 may include a second insulating plate 771, a second insulating flow part 772, and a second insulating hole 773.

The second insulating plate 771 may be one area of the second insulating member 770 located while covering the second support plate 761. The second insulating plate 771 may include a second insulating flow part 772, which is one area located at the central part of the second insulating plate 771. In this case, the second insulating flow part 772 may be one area of the second insulating member 770 located in an area corresponding to the second flow part 762. Therefore, the second insulating flow part 772 may be one area protruding from the second insulating plate 771 toward the second sub-module 100b, and also may be one area protruding in the direction of movement of the coolant.

The second insulating flow part 772 may be provided with a second insulating hole 773. The second insulating hole 773 may be provided while facing each other at a position corresponding to the second support hole 763. Therefore, the number of the second insulating holes 773 may be equal to the number of the second support holes 763, and the size of the second insulating hole 773 may be equal to the size of the second support hole 763. In this case, the coolant may move while passing through the second support hole 763 and the second insulating hole 773 in sequence.

The second insulating member 770 may include a second insulating protrusion part 775 that is a surface that protrudes vertically from the second insulating plate 771. Since the second insulating protrusion part 775 is located while covering the second support protrusion part 765, the shape of the second insulating protrusion part 775 may correspond to the shape of the second support protrusion part 765.

The second insulating protrusion part 775 may include a 2-1 insulating protrusion part 776 and a 2-2 insulating protrusion part 777 that are located at one end and the other end of the second insulating plate 771, respectively.

The 2-1 insulating protrusion part 776 may be a plate that protrudes and extends from one end (-z-axis direction) of the second insulating plate 771 in a direction perpendicular to the second insulating plate 771.

The 2-1 insulating protrusion part 776 may be a plate that protrudes and extends in a direction parallel to the lower surface (-z-axis direction) of the module frame 200. One surface of the 2-1 insulating protrusion part 776 may be located while being in contact with the 2-1 support protrusion part 766. In this case, although not disclosed in this figure, an adhesive member may be provided on one surface of the 2-1 insulating protrusion part 776 to be adhesively fixed to the 2-1 support protrusion part 766.

The 2-2 insulating protrusion part 777 may be a plate that protrudes and extends in a direction perpendicular to the second insulating plate 771 from the other end (z-axis direction) of the second insulating plate 771. The 2-2 insulating protrusion part 777 may be a plate that extends in a direction parallel to the upper surface (z-axis direction) of the module frame 200. One surface of the 2-2 insulating protrusion part 777 may be located while being in contact with the 2-2 support protrusion part 767. In this case, although not disclosed in this figure, an adhesive member may be provided on one surface of the 2-2 insulating protrusion part 777 to be adhesively fixed to the 2-2 support protrusion part 767.

The other surface of the 2-1 insulating protrusion part 776 that does not come into contact with the 2-1 support protrusion part 766, and the other surface of the 2-2 insulating protrusion part 777 that does not come into contact with the 2-2 support protrusion part 767 may be located while facing each other.

The 2-1 insulating protrusion part 776 and the 2-2 insulating protrusion part 777 may be provided so as to protrude in the same direction. Specifically, the 2-1 insulating protrusion part 776 and the 2-2 insulating protrusion part 777 may be provided so as to protrude in the direction toward the second sub-module 100b, and also may be provided to protruded in the direction of movement of the coolant within the battery module 100.

The second insulating member 770 may include an electrically insulating material. Therefore, even if the second support member 760 comes into contact with the battery cell stacks 120a and 120b or busbar assemblies 300a and 300b that constitute the first sub-module 100a and the second sub-module 100b, electrical insulation property is maintained between them, thereby ensuring the safety of the battery.

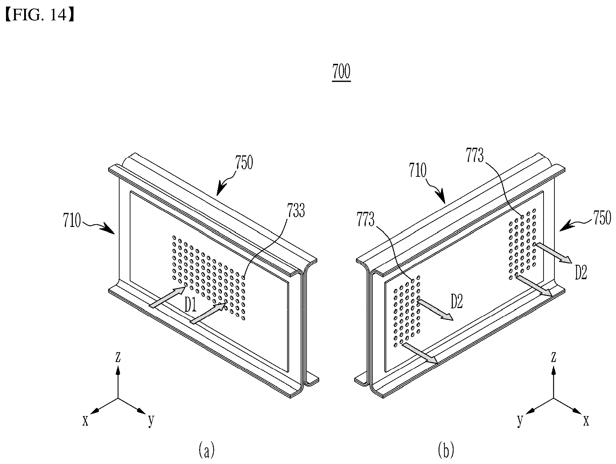

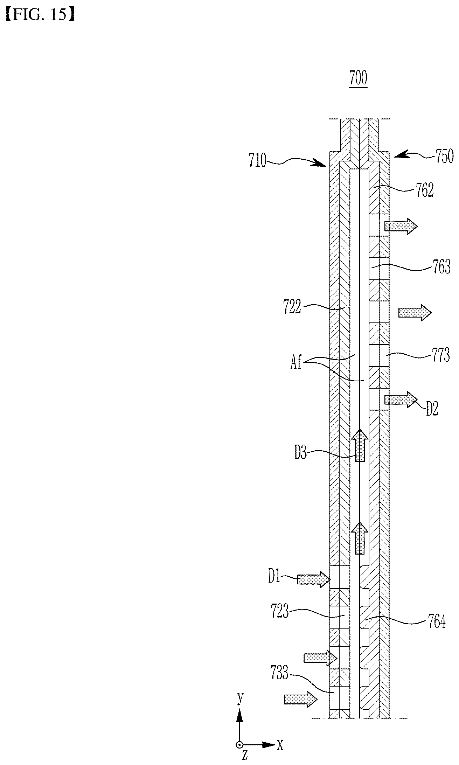

FIG. 14 is a perspective view illustrating the movement of coolant in a flame preventing member according to one embodiment of the present disclosure. FIG. 15 is a perspective view illustrating the movement of coolant in a flame preventing member according to one embodiment of the present disclosure.

Referring to FIG. 4 and FIGS 10 to 15, the first flame preventing member 710 and the second flame preventing member 750 constituting the flame preventing member 700 can be located while being in contact with each other. In this case, the flame preventing member 700 can allow only the coolant to pass through the first flame preventing member 710 and the second flame preventing member 750, and can prevent the flame from moving.

Specifically, in the first flame preventing member 710 and the second flame preventing member 750, the first support plate 721 can be located while being in contact with the second support plate 761. More specifically, the edge of the first support plate 721 is located while being in contact with the edge of the second support plate 761, wherein the first support protrusion part 725 and the second support protrusion part 765 can protrude in mutually opposite directions. That is, the surface where the first support plate 721 and the second support plate 761 come into contact with each other can be a surface located in the opposite direction to the direction in which the first support protrusion part 725 and the second support protrusion part 765 protrude, respectively.

Further, in the first support plate 721 and the second support plate 761, the first support hole 723 may be provided at a position that does not face the second support hole 763. That is, the first support hole 723 is located at the central part of the first support plate 721, and the second support hole 763 is located at both edges of the second support plate 761, so the first support hole 723 may be located without facing the second support hole 763. A protrusion part 764 may be located in an area of the second support plate 761 that faces the area where the first support hole 723 is provided.

The protrusion part 764 may be an area protruding from the second support plate 761 toward the first support hole 723. The protrusion part 764 may be an area protruding from the second flow part 762 toward the first support hole 723. In this case, the height of the protrusion part 764 may correspond to the degree to which the second flow part 762 protrudes. In detail, the height of the protrusion part 764 may be equal to or less than the height at which the second flow part 762 protrudes. Therefore, even if the protrusion part 764 protrudes toward the first flame preventing member 710, the protrusion part 764 may not come into contact with the first support hole 723.

When the first support plate 721 and the second support plate 761 are located with being in contact with each other, the first flow part 722 and the second flow part 762) are located to protrude in mutually opposite directions, so that a flow area Af, which is a prescribed space, can be provided between the first flow part 722 and the second flow part 762. The flow area Af can be a space in which coolant moves in the inside of the flame preventing member 700.

Movement of the coolant in the flame preventing member 700 will be described in more detail below.

Referring to FIGS. 5, 14 and 15, the coolant can move while passing through the flame preventing member 700 according to an embodiment of the present disclosure. Specifically, the coolant flows into the module frame 200 from the outside through the inlet 421, and may pass through the first flame preventing member 710 while moving in the first direction D1. After that, the coolant may pass through the second flame preventing member 750 and move in the second direction D2, and then be discharged to the outside of the module frame 200 through the outlet 461. Herein, the first direction D1 and the second direction D2 may be movement directions of coolant, and may be the longitudinal direction (x-axis direction) of the module frame 200, or may be a direction equal to each other.

More specifically, referring to FIG. 15, the coolant may sequentially pass through the first insulating hole 733 and the first support hole 723 while moving in the first direction D1. In this case, the coolant that has passed through the first insulating hole 733 and the first support hole 723 can move through the flow area Af in the third direction D3, and then sequentially pass through the second support hole 763 and the second insulation hole 773 to move in the second direction D2.

When the coolant flows into the flame preventing member 700 in the first direction D1, the coolant can move to the flow area Af while being in contact with the protrusion part 764. When the inflowing coolant comes into contact with the protrusion part 764, the coolant can change from a laminar flow state to a turbulent flow state. Since the coolant in a turbulent flow state has an improved heat transfer coefficient than the coolant in a laminar flow state, the coolant can move in the third direction D3 through the flow area Af in a state improved in heat transfer efficiency, and then pass through the second flame preventing member 750 to move in the second direction D2. That is, since the coolant moves from the first sub-module 100a to the second sub-module 100b in a state improved in heat transfer efficiency, the coolant provided to the second sub-module 100b corresponds to a coolant with an improved heat transfer coefficient compared to the prior art, and thus the heat generated in the second sub-module 100b can be more effectively transferred. Therefore, the temperature difference between the sub-modules 100a and 100b can be eliminated.

Further, the coolant moving through the first insulating hole 733 becomes turbulent flow while being in contact with the protrusion part 764, and at the same time, transfers heat possessed by the coolant to the above components while being in contact with the first support hole 723, the first flow part 722, the second flow part 762, and the second support hole 763, so that the temperature of the coolant can be lowered to some extent. That is, since the coolant that has been partially cooled while moving through the flame preventing member 700 moves inside the battery module, the cooling performance of the battery module is further improved, and at the same time, the temperature difference between the first sub-module 100a and the second sub-module 100b located with the flame preventing member 700 interposed between them is reduced, and also the cooling performance of the battery can be improved.

As mentioned above, the overall height (z-axis direction) of the flame preventing member 700 may correspond to the height (z-axis direction) of the module frame 200 in which the flame preventing member 700 is provided. Specifically, the overall height of the flame preventing member 700 may be equal to the height of the upper inner surface of the module frame 200 and the lower inner surface of the module frame 200. Therefore, the flame preventing member 700 may be a configuration that partitions the inside of the battery module.

When a flame occurs in the first sub-module 100a, which is one sub-module, the flame may move along the coolant. At this time, since the flame preventing member 700 is located in the movement path of the coolant within the battery module 100, the flame preventing member 700 may prevent the flame from being transmitted to an adjacent second sub-module 100b.

That is, within the battery module, the flame preventing member 700 performs the role of moving only the coolant through the movement path 800 to the area where the adjacent sub-module is located, and prevent the flame from being propagated, thereby preventing a chain of explosions within the battery module. Therefore, the safety of the battery can be improved.

The above-mentioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

100: battery module
100a: first sub-module
100b: second sub-module
110: battery cell
120: battery cell stack
300: busbar assembly
700: flame preventing member
710: first flame preventing member
720: first support plate
723: first support hole
733: first insulating hole
730: first insulating member
750: second flame preventing member
760: second support plate
763: second support hole
764: protrusion part
770: second insulating member
773: second insulating hole
Af: flow area

## Claims

1. A battery module comprising:
a first sub-module and a second sub-module each including a battery cell stack in which a plurality of battery cells are stacked;
a module frame in which the first sub-module and the second sub-module are housed; and
a flame preventing member located between the first sub-module and the second sub-module,
wherein one end of the first sub-module and the other end of the second sub-module are electrically connected to each other.

2. The battery module according to claim 1, wherein:
the flame preventing member comprises,
a first flame preventing member located while facing the first sub-module, and
a second flame preventing member located while facing the second sub-module.

3. The battery module according to claim 2, wherein:
the first flame preventing member comprises,
a first support member located while being in contact with an upper surface and a lower surface of the module frame, and
a first insulating member located while covering the outer peripheral surface of the first support member, and also located while facing the first sub-module, and
the second flame preventing member comprises,
a second support member located while being in contact with an upper surface and a lower surface of the module frame, and
a second insulating member located while covering the outer peripheral surface of the second support member, and also located while facing the second sub-module.

4. The battery module according to claim 3, wherein:
the first support member includes a first support hole passing through the first support member,
the first insulating member includes a first insulating hole passing through the first insulating member,
the second support member includes a second support hole passing through the second support member, and
the second insulating member includes a second insulating hole passing through the second insulating member.

5. The battery module according to claim 4, wherein:
the first support hole and the first insulating hole are provided while facing each other at mutually corresponding positions, and
the second support hole and the second insulating hole are provided while facing each other at mutually corresponding positions.

6. The battery module according to claim 4, wherein:
the first support hole is provided while passing through a central part of the first support member, and
the second support hole is provided while passing through both side surface portions of the second support member, respectively.

7. The battery module according to claim 4, wherein:
the second flame preventing member includes a protrusion part located so as to protrude from the second support member toward the first support member.

8. The battery module according to claim 7, wherein:
the protrusion part is located between the second support holes provided on both side surface portions of the second support member, and is provided so as to protrude toward the first support hole.

9. The battery module according to claim 7, wherein:
the protrusion part is provided while facing the first support hole at mutually corresponding positions.

10. The battery module according to claim 3, wherein:
the first support member comprises,
a first support plate which is a plate in contact with the upper surface and the lower surface of the module frame, and
a first flow part which is an area protruding from the first support plate toward the first sub-module, and
the second support member comprises,
a second support plate which is a plate in contact with the upper surface and the lower surface of the module frame, and
a second flow part which is an area protruding from the second support plate toward the second sub-module.

11. The battery module according to claim 10, wherein:
edges of the first support plate and the second support plate are located while being in contact with each other.

12. The battery module according to claim 11, wherein:
the first flow part and the second flow part are located so as to protrude in mutually opposite directions, and
a flow area, which is a prescribed space in which a coolant can move, is provided between the first flow part and the second flow part.

13. The battery module according to claim 10, wherein:
the first support member includes a first support protrusion part that protrudes in a direction perpendicular to the first support plate from one end and the other end of the first support plate, respectively, and
the second support member includes a second support protrusion part that protrudes in a direction perpendicular to the second support plate from one end and the other end of the second support plate, respectively.

14. The battery module according to claim 13, wherein:
the first support protrusion part and the second support protrusion part are located while being in contact with the upper surface and the lower surface of the module frame, respectively.

15. A battery pack comprising the battery module according to claim 1.
